# EUROPÄISCHE PATENTSCHRIFT

(11) **EP 2 112 478 B1**
(45) Veröffentlichungstag und Bekanntmachung des Hinweises auf die Patenterteilung: **01.11.2017**
(21) Anmeldenummer: 09005541.9
(22) Anmeldetag: 20.04.2009
(51) Int. Cl.: G01D 11/24

(54) **Sensor für hygienisch anspruchsvolle Produktionsbereiche**
Sensor for production areas with high levels of hygiene
Capteur pour zones de production exigeantes au niveau hygiénique

(30) Priorität: 21.04.2008 DE 202008005516 U
(43) Veröffentlichungstag der Anmeldung: 28.10.2009
(73) Patentinhaber: Pepperl + Fuchs GmbH, 68307 Mannheim (DE)
(72) Erfinder: Temme, Stephan, 68307 Mannheim (DE)
(74) Vertreter: Schiffer, Axel Martin

(56) Entgegenhaltungen:
- EP-A2- 1 281 958

## Beschreibung

Die Erfindung betrifft einen Sensor in einem Sensorgehäuse für hygienisch anspruchsvolle Produktionsbereiche, insbesondere zum Erfassen eines Gegenstands im Nahbereich des Sensors. Das Sensorgehäuse ist zum lösbaren Fixieren des Sensors in dem Produktionsbereich in einer Wand einer Produktionsmaschine oder in einer Halterung in einem Produktionsbereich gebildet. Dazu weist das Sensorgehäuse eine Außenkontur auf, die einer Innenkontur einer Öffnung in der Wand der Produktionsmaschine oder einer Öffnung in der Halterung angepasst ist. Die Außenkontur des Sensorgehäuses weist mindestens einen Gewindegang mit mindestens einem konkaven Bereich und mindestens einem konvexen Bereich auf.

In hygienisch anspruchsvollen Produktionsbereichen kommt es darauf an, dass technische Geräte, wie Sensoren und Sensorgehäuse nicht nur eine ISO-Norm 14159 für die Lebensmittel-, Pharma- und Biotechnik erfüllen, sondern auch die DIN-Norm DEN EN 1672-2 für Nahrungsmittelmaschinen. Auch sollen derartige Sensoren geplante europäische Normen für hygienisches Design von Nahrungsmittelmaschinen erfüllen und den bekannten allgemeinen Gestaltungsleitsätzen und Hygieneanforderungen gemäß Ausgabe 2005-8 genügen. Mit derartigen Normen und Leitsätzen soll eine sichere und hygienische Herstellung von Lebensmitteln erreicht werden und eine reinigungsgerechte bzw. aseptische Gestaltung sichergestellt werden.

Bei derartigen hygienisch anspruchsvollen Produktionsbereichen und Maschinen bergen Mikroorganismen, wie pathogene Erreger, Salmonellen, Listeria sowie Toxine, eine potenzielle Gefahr, die sich besonders in engen Spalten und von Reinigungsmitteln schwer erreichbaren Flächen ansiedeln und anreichern können. Eine weitere Gefahr bilden Reinigungs- und Desinfektionsmittel sowie Schmiermittel, die nicht vollständig von Oberflächen oder aus Fugen und Ritzen entfernbar sind.

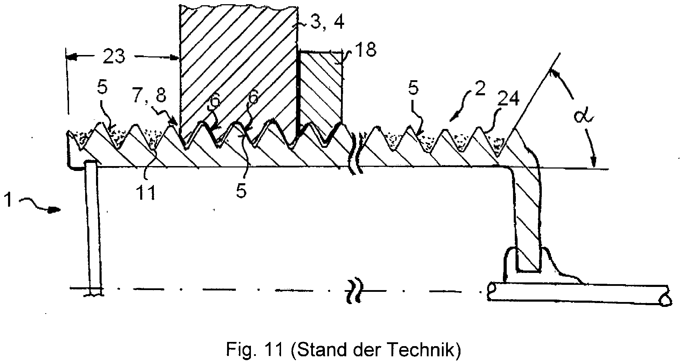

Demnach bilden auch herkömmliche Sensorgehäuse eine potenzielle Gefahr, wenn sie unverändert für hygienisch anspruchsvolle Produktionsbereiche eingesetzt werden. Ein derartiges Sensorgehäuse gemäß dem Stand der Technik zeigt Figur 11. Dieses Sensorgehäuse 2 ist auf seiner zylindrischen Außenkontur 5 mit einem metrischen Gewinde 24 versehen, um das Sensorgehäuse entweder in einer Halterung 4 oder in einer Wand 3 eines hygienisch anspruchsvollen Produktionsbereichs zu justieren und zu fixieren. Durch die Gewindegänge ist es möglich, das Sensorgehäuse in Achsrichtung des Sensors exakt zu positionieren und diese Position durch eine Kontermutter 18 zu fixieren.

Dabei bildet das detektorseitige Ende einen herausragenden Bereich 23, der in den hygienisch anspruchsvollen Produktionsbereich hineinragt und der Gefahr ausgesetzt ist, dass sich Mikroorganismen, Toxine oder andere Verschmutzungen in den Gewindegängen bzw. in den spitzwinklig zulaufenden engen Profilböden 11 der Gewindegänge ansammeln und einer hygienischen bzw. aseptischen Reinigung nicht vollständig zugänglich sind. Auch besteht die Gefahr, dass sich Kontaminationen oder Verunreinigungen ergeben, weil sich zwischen der Außenkontur 5 des zylindrischen Sensorgehäuses 2 und der Innenkontur 6 der Öffnung 7 in einer Wand 3 bzw. der Öffnung 8 in einem entsprechenden Halter 4 Mikroorganismen, Toxine oder andere Verunreinigungen festsetzen.

Als eine **Aufgabe** der Erfindung kann erachtet werden, einen Sensor mit einem Sensorgehäuse zu schaffen, der für hygienisch anspruchsvolle Produktionsbereiche verbessert ist und eine zuverlässige Reinigung seiner Oberflächen derart ermöglicht, dass diese Oberflächen weitestgehend keimfrei, kontaminationsfrei und hygienisch einwandfrei sind.

Diese Aufgabe wird mit dem Gegenstand des Anspruchs 1 gelöst. Vorteilhafte Weiterbildungen der Erfindung ergeben sich aus den abhängigen Ansprüchen.

Der Sensor der oben genannten Art ist erfindungsgemäß dadurch weitergebildet, dass ein Krümmungsradius von Oberflächen der konkaven Bereiche überall größer ist als drei Millimeter.

Als Kerngedanke der Erfindung kann angesehen werden, die konkaven Bereiche des Gewindegangs oder der mehreren Gewindegänge so auszubilden, dass an keiner Stelle enge Bereiche, also beispielsweise Ritzen, gebildet sind, in welchen sich Schmutz ablagern kann. Die Oberfläche der Gewindegänge ist deshalb leicht zu reinigen. Der Mindestkrümmungsradius der konkaven Bereiche beträgt dabei erfindungsgemäß mehr als drei Millimeter. Umfangreiche Tests und Untersuchungen haben gezeigt, dass damit gute Eigenschaften im Hinblick auf die Hygieneanforderungen erreicht werden können.

Bei einer bevorzugten Ausgestaltung des erfindungsgemäßen Sensors beträgt der festzulegende Mindestradius mindestens fünf Millimeter und besonders bevorzugt mindestens sieben Millimeter.

Grundsätzlich kann jeder Gewindegang ein unterschiedliches Gewindeprofil aufweisen. In diesem Sinn kann es sich um ein frei geformtes Gewinde handeln. Beispielsweise kann das Gewindeprofil ausschließlich aus konkaven Bereichen und konvexen Bereichen zusammengesetzt sein. Insbesondere kann es sich um Rundprofile und Rundgewinde handeln, wobei für die konkaven Bereiche, die auch als Gewindegrund bezeichnet werden, erfindungsgemäß ein Mindestradius von größer als drei Millimeter festgelegt wird.

Alternativ oder ergänzend kann ein Gewindeprofil mit einem symmetrischen oder asymmetrischen kombinierten Profil vorhanden sein, bei dem zwischen den beiderseits der Gewindespitzen oder Profilwülste liegenden konkaven Flankenabschnitten, für welche erfindungsgemäß ein Mindestradius von größer als drei Millimeter für den Übergang zum Gewindegrund festgelegt wird, Abflachungen am Gewindegrund vorhanden sind. Der Gewindegrund kann dabei auch als Profilboden bezeichnet werden und hat insbesondere einen im Wesentlichen flachen Verlauf, also einen Verlauf mit einem sehr großen Krümmungsradius. Die Gewindespitzen oder Profilwülste bilden konvexe Bereiche und können prinzipiell eine beliebige Form aufweisen, da diese auf jeden Fall gut mit entsprechenden Reinigungsmitteln und -geräten zugänglich sind.

Bei dem Sensor kann es sich grundsätzlich um jede Art von Sensor zur Messung einer physikalischen Messgröße handeln, mit welchen Objekte nachgewiesen werden können. Insbesondere kann es sich um Näherungsschalter, beispielsweise Ultraschall-Näherungsschalter, induktive oder kapazitive Näherungsschalter handeln. Aber auch für sonstige Sensoren, beispielsweise Temperatursensoren, Drucksensoren oder optische Sensoren, kann die hier beschriebene Erfindung angewendet werden.

Bei der Halterung kann es sich grundsätzlich um eine beliebige mechanische Einrichtung handeln, mit welcher der Sensor fixiert oder gehaltert wird. Insbesondere kann die Halterung mit dem Sensorgehäuse über eine Fläche in Kontakt oder in Eingriff kommen. Solche Halterungen werden auch als konturbehaftete Halterungen bezeichnet. Für die hier entstehenden Übergänge ist es im Hinblick auf Hygieneanforderungen wiederum besonders wichtig, dass Ritzen oder Spalten entweder sehr gut abgedichtet werden oder geometrisch so ausgestaltet werden, dass sie mit entsprechenden Reinigungsgeräten und Reinigungsmitteln gut zu erreichen sind. Erfindungsgemäß weisen die kritischen konkaven Bereiche einen Mindestradius von größer als drei Millimeter auf. Die Halterung kann insbesondere einen Halter aufweisen oder durch diesen gebildet sein.

Diese Ausgestaltung der Außenkontur des Sensorgehäuses hat den Vorteil, dass der Sensor nach wie vor in eine Öffnung einer Wand einer Produktionsmaschine oder in eine Öffnung einer Halterung eingeschraubt werden kann und dennoch eine Ansammlung von Mikroorganismen oder Toxinen und anderen Verunreinigungen in einem konventionellen Gewinde, das üblicherweise die Außenkontur eines derartigen Sensorgehäuses bildet, vermieden werden kann. Dabei ist entweder der Mindestradius und/oder der breite Profilboden entscheidend. Der Profilboden kann insbesondere deutlich breiter als der Profilwulst gebildet sein und kann auch breiter als bei bisher bekannten und genormten Rundgewinden vorhandene Profilböden ausgestaltet sein. Bei einem solchen im Vergleich zum Profilwulst breiten Profilboden können die Gewindegänge auf der Außenkontur des erfindungsgemäßen Sensorgehäuses besonders gut keimfrei gehalten und auch toxische Kontaminationen können vermieden werden, da keine spitzwinkeligen Kerben durch den breit angelegten Profilboden gebildet werden.

Die Öffnungen in der Halterung und/oder in der Wand weisen entsprechend der Außenkontur des Gehäuses angepasst gestaltete Innenkonturen auf, um das Sensorgehäuse einschrauben zu können. Dadurch ist es möglich, das Sensorgehäuse durch Drehbewegung in Richtung seiner Achse zu verschieben und in eine im Hinblick auf die Aufgabe die Aufgabe des Sensors geeignete Position zu verbringen. Ergänzend oder alternativ kann auch ein zusätzliches Passstück, insbesondere eine Dichtung oder Auskleidung, zur gezielten Anpassung der Außenkontur verwendet werden. Hierbei kann es sich insbesondere um sogenannte selbstformende Passstücke aus elastischem oder plastisch verformbarem Material handeln, welche erst bei der Montage ihren endgültigen Formschluss und ihre endgültige Außenkontur erhalten.

Da auch die Passung zwischen der Außenkontur des Sensorgehäuses und der Innenkontur der Öffnungen von Wand bzw. Halterung ein Problem für hygienisch anspruchsvolle Produktionsbereiche darstellen kann, werden in einer bevorzugten Ausführungsform der Erfindung die Öffnungen von Dichtlippen umgeben, die den Übergang von der profilierten Öffnung zu dem Gewindegang des Sensorgehäuses abdichten. Diese gummielastischen Dichtlippen schmiegen sich dem hygienisch anspruchsvollen Gewindeprofil im Profilwulstbereich und im Profilbodenbereich sowie in den Übergängen an.

Darüber hinaus kann die Innenkontur der Öffnung im Halter und/oder in der Wand zusätzlich mit einer antibakteriellen Beschichtung versehen sein, die dafür sorgt, dass sich zwischen dem Halter bzw. der Wand und der Außenkontur des Sensorgehäuses, insbesondere im Bereich der Gewindegänge der Außenkontur des Sensorgehäuses keine Mikroorganismen vermehren. Da die abgetöteten Mikroorganismen aber an diesem Ort verbleiben, kann dadurch möglicherweise ein Nährboden für neue Erreger gebildet werden. Zweckmäßig wird dann der Gesamtaufbau so gestaltet, dass eine leichte Zerlegbarkeit gegeben ist, damit eine Reinigung unaufwändig möglich ist.

Dies kann weiter verbessert werden, wenn auch die Außenkontur des Sensorgehäuses und insbesondere die Gewindegänge eine antibakterielle Beschichtung sowohl in dem breiten Profilboden als auch auf dem Profilwulst aufweisen. Vorzugsweise enthält eine derartige antibakterielle Beschichtung Silberjodid.

In einer weiteren Ausführungsform der Erfindung kann der für eine Gleitpassung erforderliche Spalt zwischen Außenkontur des Sensorgehäuses und Innenkontur der Öffnung der Halterung dadurch minimiert werden, dass die Öffnung eine federelastische Auskleidung aufweist, die einen Anpressdruck auf den Gewindegang des Sensorgehäuses ausübt. Als federelastische Auskleidung kommen vorzugsweise gummielastische Materialien in Betracht, wobei die federelastische Wirkung noch durch eine entsprechende Formgebung der Halterung verstärkt werden kann. Dazu weist der Halter einen Einspannring auf, der die federelastische Auskleidung umgibt und den Anpressdruck auf den Gewindegang des Sensorgehäuses verstärkt. Dieser Einspannring kann auch als geteilter Einspannring ausgeführt werden und wie eine Klammer wirken. Um eine einmal eingestellte Position des Sensorgehäuses zu fixieren, wird vorzugsweise mindestens eine Kontermutter auf dem Gehäuse so positioniert, dass das Sensorgehäuse in seiner Position in der Wand bzw. in der Halterung gesichert ist. Beispielsweise kann das Sensorgehäuse mit Hilfe einer Durchsteckmontage in einer gewindelosen Öffnung einer Halterung befestigt sein. Die Fixierung kann dann durch zwei beiderseits der Öffnung montierte Kontermuttern durch Klemmung erfolgen. Bevorzugt sind zwischen dem Sensorgehäuse und den Kontermuttern dann jeweils geeignete Dichtelemente vorgesehen.

In einer weiteren Ausführungsform der Erfindung ist es vorgesehen, dass die Halterung eine Haltestange aufweist, die an ihrem freien Ende einen Einspannring für den Sensor aufweist und mit ihrem anderen Ende auf einer Gerätewand fixiert ist. Mit dieser Haltestange kann das Sensorgehäuse in die Nähe des zu überwachenden bzw. zu erfassenden Gegenstands in einer hygienisch anspruchsvollen Umgebung gebracht werden.

Schließlich ist es auch möglich, um Kontaminationen, Verunreinigungen, Mikroorganismen oder Toxine von den Oberflächen des Sensorgehäuses zurückzuhalten, dass ein Überzugselement den aus dem Halter bzw. aus der Wand herausragenden Bereich des Sensorgehäuses umhüllt.

Das Sensorgehäuse kann sowohl mit Kabelabgang als auch mit Steckerverbindung ausgeführt sein.

Die Erfindung wird nun anhand der beigefügten Figuren näher erläutert.
- Figur 1: zeigt schematisch eine Anordnung eines Sensors und einer Halterung in einem hygienisch anspruchsvollen Produktionsbereich;
- Figur 2: zeigt schematisch eine Anordnung eines Sensors in einer Öffnung einer Wand eines hygienisch anspruchsvollen Produktionsbereichs;
- Figur 3: zeigt einen schematischen Querschnitt durch einen Sensor gemäß einer Ausführungsform der Erfindung, der in eine Öffnung eingeschraubt ist;
- Figur 4A: zeigt einen schematischen Querschnitt durch ein Gewinde für einen hygienisch anspruchsvollen Produktionsbereich mit einem ersten Gewindeprofil;
- Figur 4B: zeigt einen schematischen Querschnitt durch ein Gewinde für einen hygienisch anspruchsvollen Produktionsbereich mit einem zweiten Gewindeprofil;
- Figur 4C: zeigt vergleichsweise einen schematischen Querschnitt durch ein Gewinde nach dem Stand der Technik;
- Figur 5: zeigt einen schematischen Querschnitt durch einen Sensor in einer Öffnung mit einer antibakteriellen Beschichtung der Innenkontur der Öffnung;
- Figur 6: zeigt einen schematischen Querschnitt durch einen Sensor mit einer antibakteriellen Beschichtung auf der Außenkontur des Sensors;
- Figur 7: zeigt einen schematischen Querschnitt durch einen Sensor in einer Öffnung, die mit Dichtlippen versehen ist;
- Figur 8: zeigt einen schematischen Querschnitt durch einen Sensor, der in einer Halterung mit federelastischer Auskleidung angeordnet ist;
- Figur 9: zeigt einen schematischen Querschnitt durch einer Halterung mit federelastische Auskleidung;
- Figur 10: zeigt einen schematischen Querschnitt durch eine Anordnung aus Sensor und Halterung bzw. Wand einer weiteren Ausführungsform der Erfindung;
- Figur 11: zeigt einen schematischen Querschnitt durch eine Anordnung aus Sensor und Halterung bzw. Wand gemäß dem Stand der Technik;
- Figur 12: zeigt in schematischer Teilansicht ein weiteres Ausführungsbeispiel der Erfindung;
- Figur 13: zeigt in schematischer Teilansicht ein weiteres Ausführungsbeispiel der Erfindung;
- Figur 14: zeigt in schematischer Teilansicht ein weiteres Ausführungsbeispiel der Erfindung und
- Figur 15: zeigt in schematischer Teilansicht ein weiteres Ausführungsbeispiel der Erfindung.

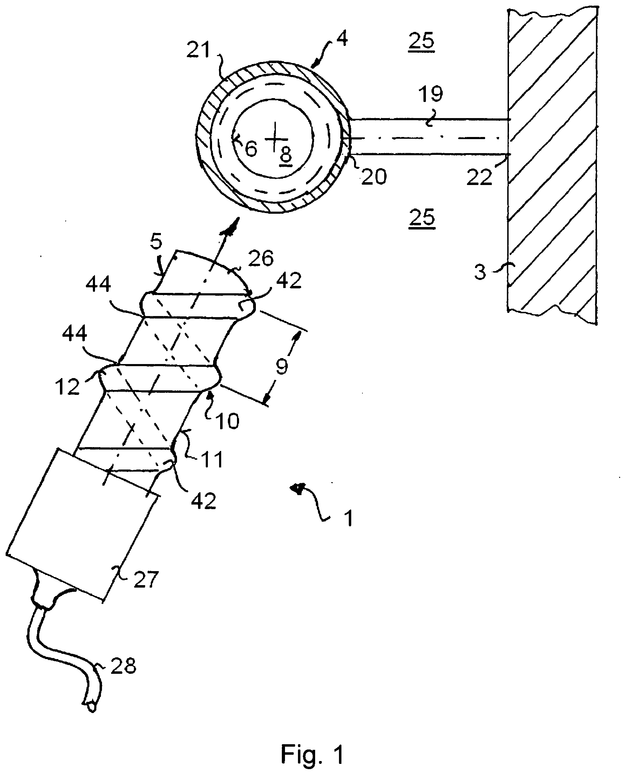

Figur 1 zeigt schematisch eine Anordnung eines Sensors 1 und einer Halterung 4 in einem hygienisch anspruchsvollen Produktionsbereich 25 vor dem Einführen des Sensors 1 in die Halterung 4. Dazu weist die Halterung 4 eine Öffnung 8 mit einer Innenkontur 6 auf, die der Außenkontur 5 des Sensorgehäuses 2 angepasst ist. Der Sensor 1 weist als Außenkontur 5 ein kombiniertes Gewinde 10 mit einem aus einem Profilwulst 12 gebildeten Gewindegang 42 und dazwischen liegenden Profilböden 11 auf. Ein Hub des Gewindegangs 42 ist mit dem Bezugszeichen 9 gekennzeichnet. Durch die Profilwülste 12 werden konvexe Bereiche gebildet und durch Übergangsbereiche 44 zwischen den Profilwülsten 12 und den Profilböden 11 werden konkave Bereiche gebildet. Mit dem Gewinde kann das Sensorgehäuse 2 in die Öffnung 8 der Halterung 4 eingedreht werden. Erfindungsgemäß ist der Krümmungsradius der Oberfläche des Sensorgehäuses im Bereich der durch die Übergangsbereiche 44 gebildeten konvexen Bereiche überall größer als drei Millimeter.

Während ein freies Ende des Sensorgehäuses 2, an dem beispielsweise der Sensorkopf 26 für eine induktive Erfassung angeordnet ist, in die Öffnung 8 der Halterung 4 eindrehbar ist, sind am anderen Ende 27 Übergänge zu einem Kabelanschluss 28 des Sensorgehäuses 2 vorhanden. Auch der Kabelanschluss 28 ist so gestaltet, dass keine spitzwinkeligen Fugen oder Ecken entstehen, in denen sich Keime oder andere Kontaminationen festsetzen können. Die Halterung 4 weist eine Haltestange 19 auf, die an einem freien Ende 20 die Halterung 4 mit einem Einspannring 21 trägt und an einem anderen Ende 22 an einer Wand 3, beispielsweise einer Produktionsmaschine oder eines Produktionsbereichs mit hohen hygienischen Anforderungen, fixiert ist.

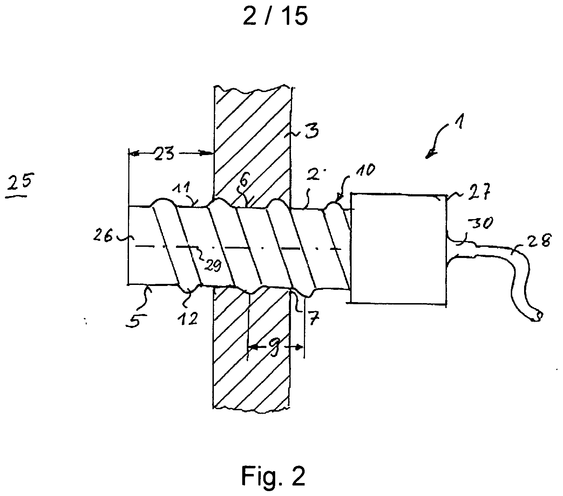

Figur 2 zeigt schematisch eine Anordnung eines Sensors 1 in einer Öffnung 7 einer Wand 3 eines hygienisch anspruchsvollen Produktionsbereichs 25. Komponenten mit gleichen Funktionen wie in Figur 1 sind mit gleichen Bezugszeichen gekennzeichnet und werden nicht extra beschrieben. In dieser Ausführungsform der Erfindung wird das Sensorgehäuse 2 mit dem Sensorkopf 26 und dem kombinierten Gewinde in eine entsprechend geformte Innenkontur 6 der Öffnung 7 in der Wand 3 der Produktionsmaschine eingeschraubt, so dass der Kopf 26 mit einem Sensorkopfbereich 23 in den hygienisch anspruchsvollen Produktionsbereich hineinragt, während das elektrische Anschlusskabel 28 am anderen Ende 27 des Sensors 1 in einem durch die Wand 3 getrennten weniger kritischen Raum angeordnet ist.

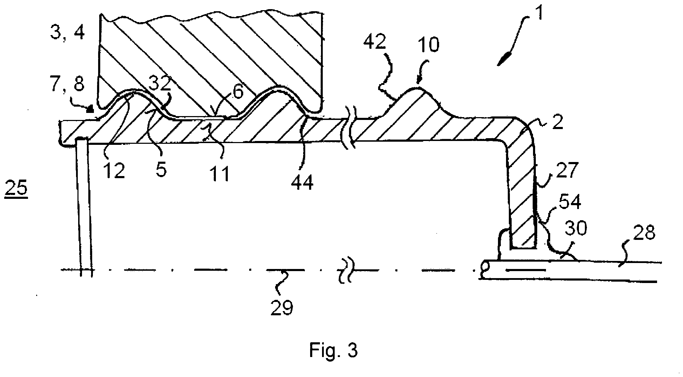

Figur 3 zeigt einen schematischen Querschnitt durch einen Sensor 1 gemäß einer Ausführungsform der Erfindung, der in eine der Öffnungen 7 oder 8 eingeschraubt ist. Komponenten mit gleichen Funktionen wie in den vorhergehenden Figuren werden in den nachfolgenden Figuren 3 bis 15 mit gleichen Bezugszeichen gekennzeichnet und nicht extra beschrieben.

Durch den Gewindegang 42 des kombinierten Gewindes 10 kann der Sensor 1 mit seinem Sensorgehäuse 2 in Richtung der Achse 29 justiert werden. Dabei werden durch die Außenkontur 5 des Sensorgehäuses 2 mit dem relativ flachen gut zugänglichen Profilboden 11 sowie dem stark abgerundeten Profilwulst 12 Gewindegänge mit einem Hub 9 bereitgestellt, die von Kontaminationen und Keimen frei gehalten werden können. Der Übergang mit Hilfe einer gummielastischen Manschette 30 für den Kabelanschluss 28 ist ebenfalls so gestaltet, dass dieser Übergang mit der gummielastischen Manschette 30 in hygienisch anspruchsvollen Produktionsbereichen eingesetzt werden kann.

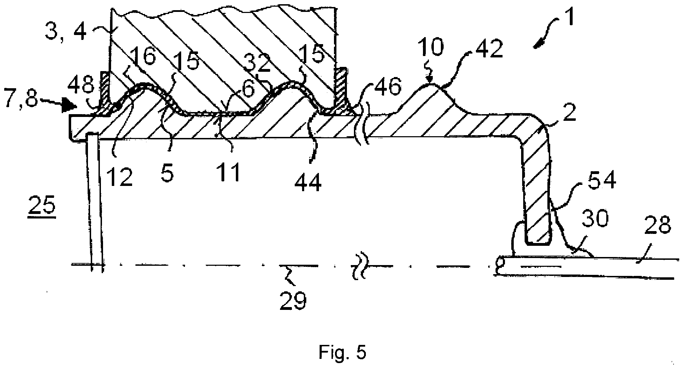

Bei einer praktisch eingesetzten Variante müssen die Öffnungen 7, 8 durch geeignete Maßnahmen, insbesondere geeignete Gummidichtungen, abgedichtet werden, wie dies beispielsweise in dem in Figur 5 gezeigten Ausführungsbeispiel realisiert ist.

Ein Übergangsbereich 54 der Manschette 30 zum Sensorgehäuse 2 ist ebenfalls mit einem möglichst großen Krümmungsradius gebildet, so dass auch hier im Hinblick auf Hygieneanforderungen und leichte Reinigbarkeit gute Eigenschaften erzielt werden.

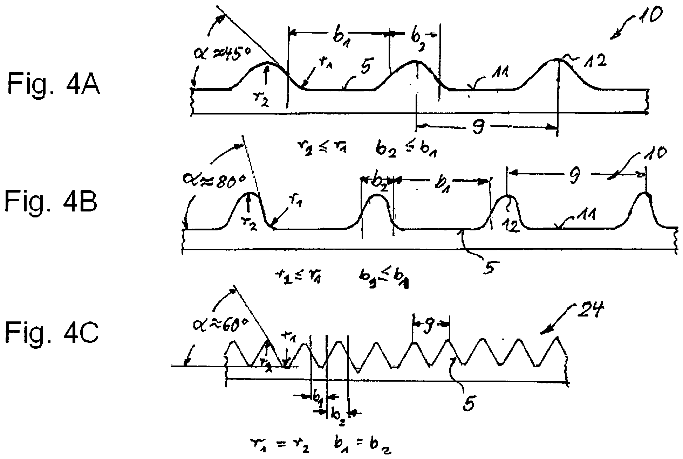

Figur 4A zeigt einen schematischen Querschnitt durch ein kombiniertes Gewinde 10 für einen hygienisch anspruchsvollen Produktionsbereich mit einem ersten Gewindegang oder Gewindeprofil, bei dem die Breite b₁ des flachen Profilbodens 11 größer ist, als die Breite b₂ des Profilwulstes 12. Der Übergang vom Profilwulst 12 zu dem Profilboden 11 kann als konkaver Bereich angesehen werden und weist einen Radius r₁ auf, der größer oder gleich dem Radius r₂ des Wulstes ist. Die Radien r₁ und r₂ sind bei dieser Ausführungsform der Erfindung größer als drei Millimeter und sorgen dafür, dass keine spitzwinkeligen Übergänge bei dem Gewinde auftreten. Der Flankenwinkel α dieses kombinierten Gewindes 10 ist mit 45° vergleichsweise flach.

Figur 4B zeigt einen schematischen Querschnitt durch ein kombiniertes Gewinde 10 für einen hygienisch anspruchsvollen Produktionsbereich mit einem zweiten Gewindegang oder Gewindeprofil, wobei der Unterschied zum Gewindegang gemäß Figur 4A darin besteht, dass dieses Gewindeprofil mit α = 80° steilere Flanken aufweist. Dennoch ist der Übergang von dem Profilwulst 12 zu dem Profilboden 11 von einem Radius r₁ bestimmt, der größer als drei Millimeter ist. Auch der Profilwulst 12 läuft nicht spitz zu, sondern ist an seiner Spitze angerundet mit einem Radius r₂, wobei r₁ größer oder gleich r₂ ist.

Figur 4C zeigt zum Vergleich einen Querschnitt für ein konventionelles Gewinde, bei dem der Flankenwinkel α zwischen 55° und 60° liegt. Die Breiten b₁ und b₂ und die Radien r₁ und r₂ sind gleich groß, wobei die Radien r₁ und r₂ geringer als drei Millimeter. Ein derartiges Gewinde 24 ist aufgrund seiner spitzwinkeligen Kerben der Gewindegänge für einen hygienisch anspruchsvollen Produktionsbereich nicht geeignet.

Zwischen der Außenkontur 5 des Sensorgehäuses 2 und der Innenkontur 6 der Wand 3 bzw. der Halterung 4 verbleibt ein Spalt 32. In diesem Spalt 32 können sich ebenfalls toxische Materialien oder Mikroorganismen ansammeln. In Figur 5 ist dieser Spalt 32 so weit wie möglich von einer antibakteriellen Beschichtung aus einem mit Silberjodid gefüllten Kunststoff 15 aufgefüllt, so dass erwartet werden kann, dass Keime sich hier nicht vermehren. Dazu ist in dieser Ausführungsform mindestens die Innenkontur 6 der Öffnung 7 oder 8 der Wand 3 bzw. der Halterung 4 mit der antibakteriellen Beschichtung 16 bedeckt. Bei dem in Figur 5 gezeigten Ausführungsbeispiel sind an dem Kunststoff 15 zur Bereitstellung eines glatten Übergangs zum Sensorgehäuse 2 Zungen 46, 48 vorhanden, durch welche Krümmungsradien der Außenkontur von größer als drei Millimeter bereitgestellt werden.

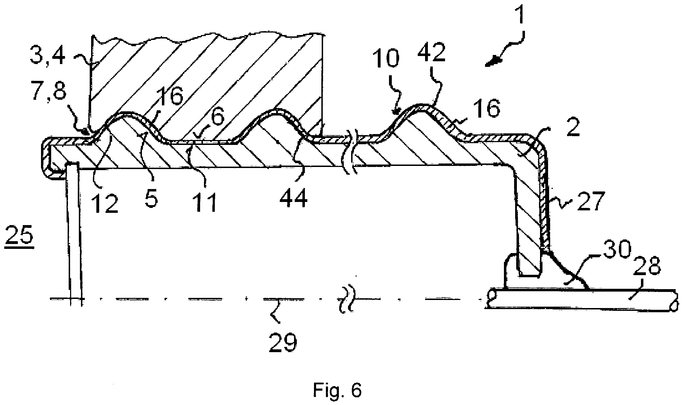

Figur 6 zeigt einen schematischen Querschnitt durch einen Sensor 1 mit einer antibakteriellen Beschichtung 16 seiner Außenkontur, wobei der Sensor 1 in eine Öffnung 7 oder 8 einer Wand 3 bzw. einer Halterung 4 eingeschraubt ist. Der Unterschied zu den vorgehenden Ausführungsformen besteht darin, dass nun die antibakterielle Beschichtung 16 auf die gesamte Außenkontur 5 des Sensorgehäuse 2 aufgebracht ist, um sicherzustellen, dass sich auf der zugänglichen Außenkontur 5 des Sensorgehäuses 2 Keime nicht vermehren können.

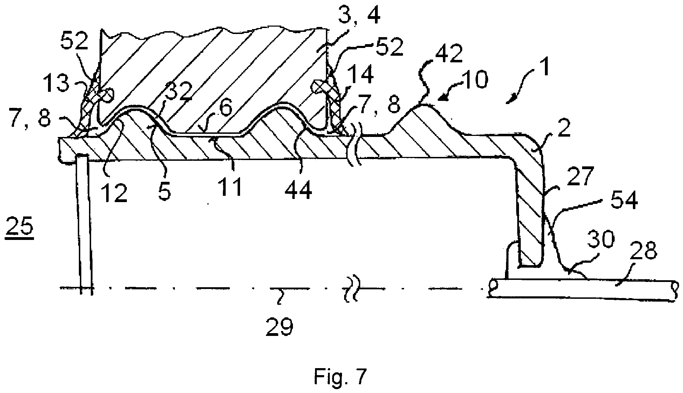

Figur 7 zeigt einen schematischen Querschnitt durch einen erfindungsgemäßen Sensor 1 in einer Öffnung 7 oder 8 einer Wand 3 bzw. einer Halterung 4, wobei im Bereich der Öffnung 7 bzw. 8 an der Wand 3 bzw. an der Halterung 4 Dichtlippen 13 und 14 angeordnet sind, die mit ihren Dichtlippenenden auf die Außenkontur 5 des Sensorgehäuses 2 pressen und dabei den Gewindegängen bzw. den Profilwülsten 12 formgetreu folgen und sowohl auf den Profilwülsten 12 als auch auf den Profilböden 11 voll anliegen. Mit dieser Anordnung kann in vorteilhafter Weise der Spalt 32 ohne Einsatz von antibakteriellen Beschichtungen abgedichtet werden. An Übergangsbereichen der Dichtlippen 13, 14 zur Wand 3 bzw. zur Halterung 4 weisen die Dichtlippen 13, 14 jeweils zungenartige Ausläufer 52 auf, um möglichst glatte Übergänge bereitzustellen.

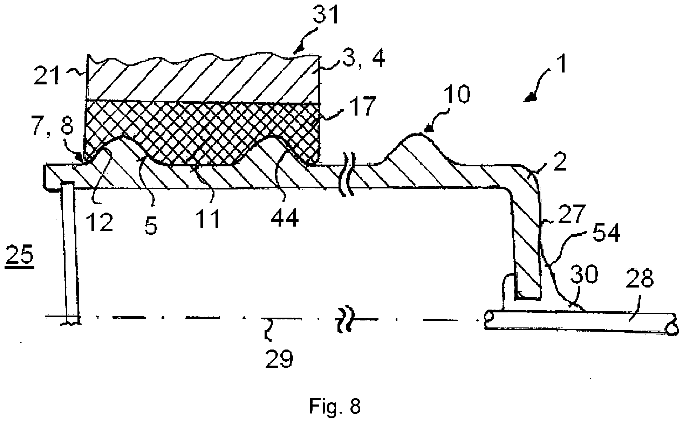

Figur 8 zeigt einen schematischen Querschnitt durch einen Sensor 1, der in einer Halterung mit federelastischer Auskleidung 17 angeordnet ist. Diese federelastische Auskleidung 17 kann ein Gummiwerkstoff sein, so dass sich eine gummielastische Wirkung ergibt. Das gummielastische Material 17 kann zusammen mit einem Einspannring 21 ein Metallgummibauteil 31 für eine Halterung 4 bilden. Durch die gummielastischen Eigenschaften der Auskleidung 17 ist gewährleistet, dass sich zwischen der Innenkontur 6 in der Öffnung 7 bzw. 8 kein Spalt zu der Außenkontur 5 des Sensorgehäuses 2 ausbildet. Grundsätzlich sind auch Varianten möglich, bei denen das Material 17 auf der Außenseite des Sensorgehäuses 2 angebracht ist.

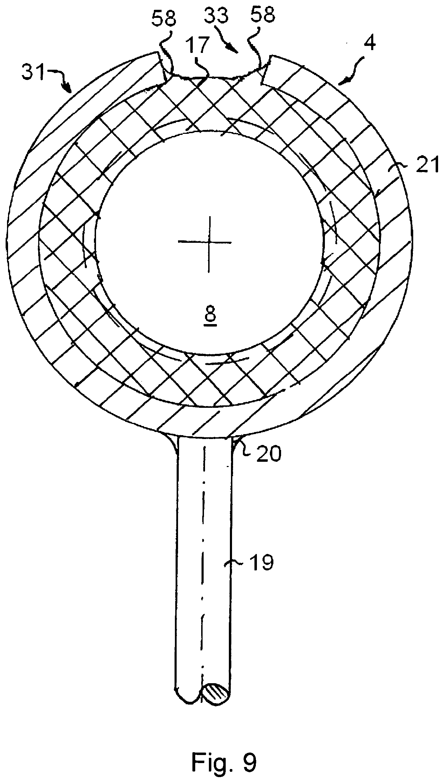

Figur 9 zeigt einen schematischen Querschnitt durch eine Halterung 4 mit federelastischer Auskleidung 17, der als Metallgummibauteil 31 ausgebildet ist. Dabei umfasst der Einspannring 21 die gummielastische Auskleidung 17 fast vollständig bis auf eine Öffnung 33, die jedoch so groß ist, dass sie keine Probleme für einen hygienisch anspruchsvollen Produktionsbereich bildet. Um möglichst Außenkonturen mit großen Krümmungsradien der konvexen Bereiche zu bilden, sind bei der Auskleidung 17 im Bereich der Öffnung 33 Überlappungen 58 des Materials vorgesehen. Durch diese Überlappungen 58, bei denen der Krümmungsradius der Außenkontur bevorzugt ebenfalls größer als drei Millimeter gewählt wird, werden Hohlkehlen gebildet, durch die gute Eigenschaften für die Reinigung erzielt werden.

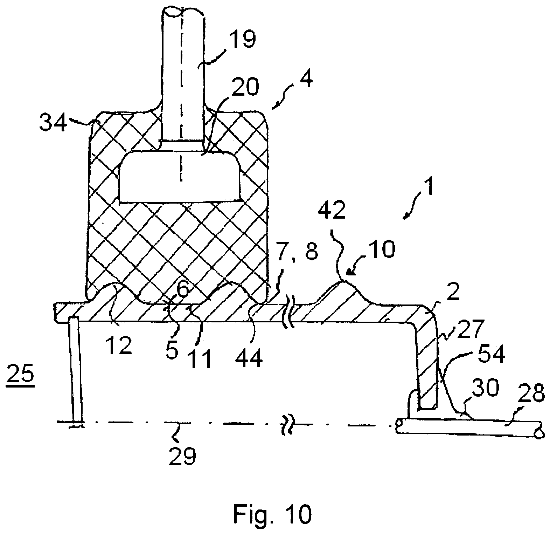

Figur 10 zeigt einen schematischen Querschnitt durch eine Anordnung aus Sensor 1 und Halterung 4 einer weiteren Ausführungsform der Erfindung. In dieser Ausführungsform der Erfindung wird auf einen Einspannring vollständig verzichtet. Vielmehr bildet eine gummielastische Masse 34 den kompletten Ring. In die gummielastische Masse 34 ragt das freie Ende 20 einer Halterung 4, 19 hinein und bildet ebenfalls mit der gummielastischen Masse 34 ein Metallgummibauteil 31, wobei auch hier die gummielastische ringförmige Masse dafür sorgt, dass sich kein Spalt zwischen der Innenkontur 6 der Halterung 4 und der Außenkontur 5 des Sensorgehäuses 2 ausbilden kann. Die Halterung 4 kann beispielsweise eine Haltestange 19 oder ein Bandprofil aufweisen oder durch diese gebildet sein.

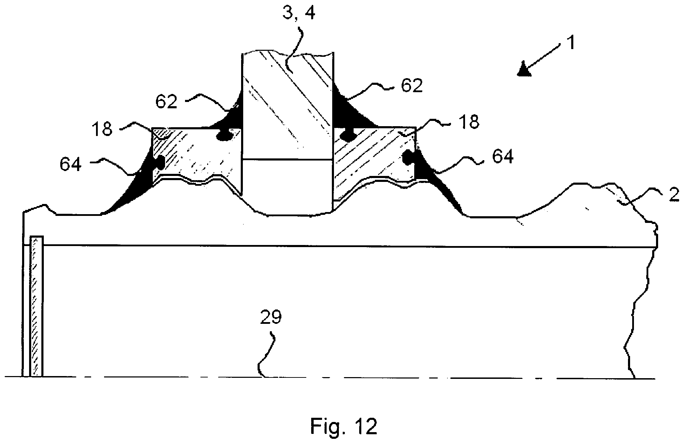

Im Zusammenhang mit den Figuren 12 bis 15 werden im Folgenden Ausführungsvarianten des erfindungsgemäßen Sensors beschrieben, bei denen der Sensor mit Hilfe einer Durchsteckmontage in einer gewindelosen Öffnung einer Halterung befestigt wird. Die Fixierung erfolgt jeweils durch zwei beiderseits der Öffnung montierte Kontermuttern. Die Kontermuttern weisen dabei jeweils geeignete Dichtelemente auf, die im Folgenden näher beschrieben werden.

In Fig. 12 ist eine Ausführungsvariante eines erfindungsgemäßen Sensors 1 mit einem Sensorgehäuse 2 dargestellt, bei der das Sensorgehäuse 2 gegenüber einer Halterung 4 oder einer Wand 3 durch zwei Kontermuttern 18 gehalten wird. Die Fixierung wird dabei durch eine Klemmung zwischen den beiden Kontermuttern 18 erreicht. Um die im Hinblick auf die hygienischen Anforderungen günstigen Eigenschaften zu erreichen ist, wie aus Fig. 12 ersichtlich, der Übergang zwischen den Kontermuttern 18 und der Halterung 4 beziehungsweise der Wand 3 durch Dichtungen 62 abgedichtet. Diese Dichtungen 62 können beispielsweise an der Halterung 4 anvulkanisiert sein und befinden sich mit den Kontermuttern 18, wie in Fig. 12 schematisch dargestellt, in einem formschlüssigen hintergreifenden Eingriff. Das Profil der Dichtungen 62, die bevorzugt aus einem Elastomermaterial gebildet sind, ist dabei zweckmäßig so gewählt, dass sich im Bereich des Übergangs zwischen der Halterung 4 und der Kontermutter 18 ein möglichst großer Krümmungsradius ausbildet. In ähnlicher Weise ist ein Übergang zwischen den Kontermuttern 18 und dem Sensorgehäuse 2 des erfindungsgemäßen Sensors 1 durch geeignet geformte Dichtungen 64 abgedichtet. Diese Dichtungen 64 befinden sich wiederum mit den Kontermuttern 18 in einem formschlüssigen hintergreifenden Eingriff und werden durch elastische Kräfte gegen die Oberfläche des Sensorgehäuses 2 gedrückt. Auch hier ist das Profil zweckmäßig so gewählt, dass sich im Bereich des Übergangs zwischen den Kontermuttern 18 und dem Sensorgehäuse 2 ein möglichst großer Krümmungsradius ausbildet.

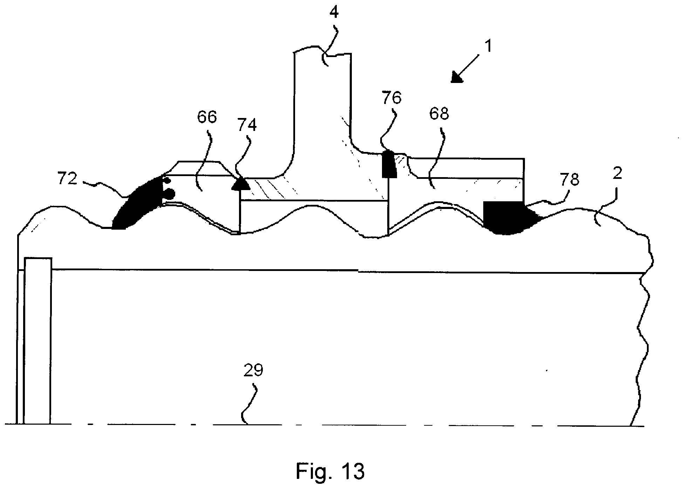

Ein alternatives Ausführungsbeispiel ist in Fig. 13 dargestellt, wobei auch hier das Sensorgehäuse 2 mit Hilfe einer ersten Kontermutter 66 und einer zweiten Kontermutter 68 an einer Halterung 4 fixiert wird. Der Übergang zwischen der Halterung 4 und der ersten Kontermutter 66 wird durch eine O-Ringdichtung 74 abgedichtet. Der Übergang zwischen der Halterung 4 und der zweiten Kontermutter 68 ist durch eine Flachring-Dichtung 76 abgedichtet.

Ähnlich wie bei dem im Zusammenhang mit Fig. 12 beschriebenen Ausführungsbeispiel ist der Übergang zwischen der ersten Kontermutter 66 und dem Sensorgehäuse 2 durch eine Dichtung 72 abgedichtet, welche durch eigene elastische Kräfte gegen das Sensorgehäuse 2 gedrückt wird und sich, wie in Fig. 13 schematisch gezeigt, mit der ersten Kontermutter 66 in einem hintergreifenden formschlüssigen Eingriff befindet. An der zweiten Kontermutter 68 ist eine Dichtung 78 anvulkanisiert, die ebenfalls aus einem Elastomermaterial gebildet ist und als Dichtungsformelement bezeichnet werden kann. Zur Arretierung dieser Dichtung 78 relativ zu der zweiten Kontermutter 68 können in dem fraglichen Bereich an der Kontermutter 68 Profilierungen, beispielsweise in Form von Zähnen, vorhanden sein. Die Dichtung 78 wird beim Aufdrehen der Kontermutter 68 auf das erfindungsgemäße Sensorgehäuse 2 verformt und schmiegt sich, wie aus Fig. 13 ersichtlich, an das Sensorgehäuse 2 an. Im Hinblick auf die hygienischen Eigenschaften ist dabei wichtig, dass sich auch hier eine Außenkontur bildet, bei der ein Mindestradius von drei Millimeter nicht unterschritten wird.

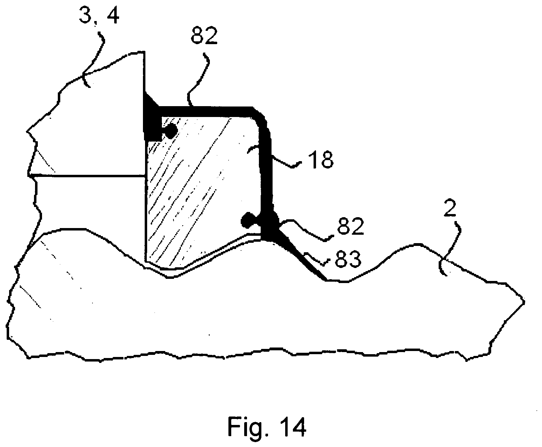

Fig. 14 zeigt eine alternative Realisierung der in Fig. 12 gezeigten Variante. Statt der in Fig. 12 dargestellten zwei Dichtungen 62, 64 ist in Fig. 14 eine einzige Dichtung 82 vorgesehen, welche die Kontermutter 18 nach außen vollständig umgibt. Diese Dichtung 82 kann beispielsweise an die Halterung 4 anvulkanisiert sein. Wie in Fig. 4 schematisch gezeigt, befindet sich die Dichtung 82 an zwei Stellen mit der Kontermutter 18 in einem hintergreifenden formschlüssigen Eingriff. Die Abdichtung gegenüber dem Sensorgehäuse 2 wird wiederum durch eine elastische Verformung der Dichtung 82 in einem an dem Sensorgehäuse 2 anliegenden Endbereich 83 der Dichtung erzielt.

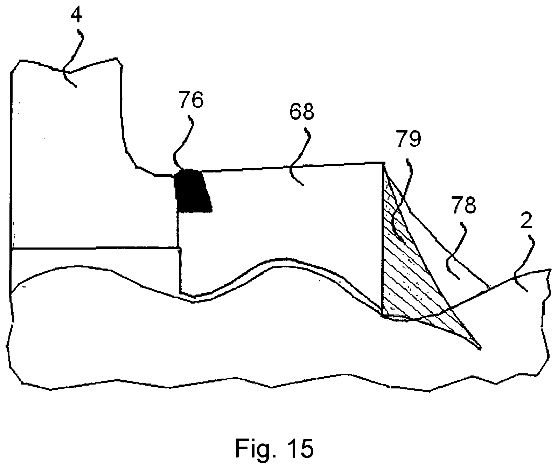

Fig. 15 zeigt eine alternative Ausgestaltung des in Fig. 13 gezeigten Beispiels. Im Unterschied zu der in Fig. 13 dargestellten Situation, bei der die Dichtung 78 in eine stirnseitige Ausnehmung der Kontermutter 18 einvulkanisiert ist, ist bei dem in Fig. 15 gezeigten Beispiel die Dichtung 78 direkt auf eine Stirnseite der Kontermutter 68 vulkanisiert. Gezeigt ist in Fig. 15 außerdem, wie sich die Dichtung 78, deren Form im nichtmontierten Zustand durch das Bezugszeichen 79 gekennzeichnet ist, während der Montage verformt. Durch den dabei entstehenden Anpressdruck gegenüber dem Sensorgehäuse 2 wird der für die Hygieneeigenschaften wichtige Dichteffekt bewerkstelligt.

## Patentansprüche

1. Sensor in einem Sensorgehäuse (2) für hygienisch anspruchsvolle Produktionsbereiche insbesondere zum Erfassen eines Gegenstands im Nahbereich des Sensors (1), wobei das Sensorgehäuse (2) gebildet ist zum lösbaren Fixieren des Sensors (1) in dem Produktionsbereich in einer Wand (3) einer Produktionsmaschine oder in einer Halterung (4) in einem Produktionsbereich,
wobei das Sensorgehäuse (2) eine Außenkontur (5) aufweist, die einer Innenkontur (6) einer Öffnung (7) in der Wand (3) der Produktionsmaschine oder einer Öffnung (8) in der Halterung angepasst ist und mindestens einen Gewindegang mit mindestens einem konkaven Bereich (44) und mindestens einem konvexen Bereich (12) aufweist,
**dadurch gekennzeichnet,**
**dass** ein Krümmungsradius (r₁) von Oberflächen der konkaven Bereiche (44) überall größer ist als drei Millimeter.

2. Sensor nach einem Anspruch 1,
**dadurch gekennzeichnet,**
**dass** die Gewindegänge ausschließlich konkave Bereiche und konvexe Bereiche aufweisen.

3. Sensor nach einem Anspruch 1 oder 2 ,
**dadurch gekennzeichnet,**
**dass** mindestens ein Gewindegang ein kombiniertes Profil aufweist mit Gewindespitzen (12), mit Flankenabschnitten, welche an die Gewindespitzen angrenzen und mit zwischen den Flankenabschnitten liegenden Abflachungen, durch welche ein Gewindegrund gebildet ist.

4. Sensor nach einem der Ansprüche 1 bis 3,
**dadurch gekennzeichnet,**
**dass** die Öffnung (8) in der Halterung (4) oder die Öffnung (7) in der Wand (3) von Dichtlippen (13, 14) umgeben sind, die den Übergang von der Öffnung (7, 8) zu dem Gewindegang des Sensorgehäuses (2) abdichten.

5. Sensor nach einem der Ansprüche 1 bis 4,
**dadurch gekennzeichnet,**
**dass** das Sensorgehäuse mit Hilfe einer Durchsteckmontage in einer gewindelosen Öffnung einer Halterung (4) befestigt ist.

6. Sensor nach Anspruch 3,
**dadurch gekennzeichnet,**
**dass** das kombinierte Profil einen Profilboden (11) und einen Profilwulst (12) aufweist,
wobei der Profilboden (11) breiter als der Profilwulst (12) ist.

7. Sensor nach einem der Ansprüche 1 bis 6,
**dadurch gekennzeichnet,**
**dass** das Sensorgehäuse (2) außen eine antibakterielle Beschichtung (16) aufweist.

8. Sensor nach Anspruch 7,
**dadurch gekennzeichnet,**
**dass** die antibakterielle Beschichtung (16) Silberjodid aufweist.

9. Sensor nach einem der Ansprüche 1 bis 8,
**dadurch gekennzeichnet,**
**dass** die Öffnung (8) in der Halterung (4) oder die Öffnung (7) in der Wand (3) eine federelastische Auskleidung (17) aufweist, die einen Anpressdruck auf den Gewindegang des Sensorgehäuses (2) ausübt.

10. Sensor nach einem der Ansprüche 1 bis 9,
**dadurch gekennzeichnet,**
**dass** das Sensorgehäuse (2) mit mindestens einer Kontermutter (18) in der Halterung (4) oder in der Wand (3) gesichert ist.

11. Sensor nach einem der Ansprüche 1 bis 10,
**dadurch gekennzeichnet,**
**dass** die Halterung (4) eine Haltestange (19) aufweist, die an ihrem freien Ende (20) einen Einspannring (21) für den Sensor (1) aufweist und mit ihrem anderen Ende an einer Gerätewand fixiert ist.

12. Sensor nach einem der Ansprüche 1 bis 11,
**dadurch gekennzeichnet,**
**dass** das Sensorgehäuse (2) außerhalb der Halterung (4) oder der Wand (3) ein Überzugselement aufweist, das den aus der Halterung (4) bzw. der Wand (3) herausragenden Bereich (23) des Sensorgehäuses (2) umhüllt.

## Claims

1. Sensor in a sensor housing (2) for high level hygiene production areas in particular for detecting an object in the vicinity of the sensor (1), wherein the sensor housing (2) is formed for releasable fixing of the sensor (1) in the production area in a wall (3) of a production machine or in a holder (4) in a production area,
wherein the sensor housing (2) has an outer contour (5), which is adapted to an inner contour (6) of an opening (7) in the wall (3) of the production machine or an opening (8) in the holder, and has at least one thread with at least one concave area (44) and at least one convex area (12),
**characterised in that**
a radius of curvature (r₁) of surfaces of the concave areas (44) is larger overall than three millimetres.

2. Sensor according to claim 1,
**characterised in that**
the threads have exclusively concave areas and convex areas.

3. Sensor according to claim 1 or 2,
**characterised in that**
at least one thread has a combined profile with thread crests (12), with flank portions, which are adjacent to the thread crests, and with flattened portions lying between the flank portions, through which a thread root is formed.

4. Sensor according to one of claims 1 to 3,
**characterised in that**
the opening (8) in the holder (4) or the opening (7) in the wall (3) are surrounded by sealing lips (13, 14), which seal the transition from the opening (7, 8) to the thread of the sensor housing (2).

5. Sensor according to one of claims 1 to 4,
**characterised in that**
the sensor housing is fastened by means of a push-through assembly in a non-threaded opening of a holder (4).

6. Sensor according to claim 3,
**characterised in that**
the combined profile has a profile bottom (11) and a profile bead (12), wherein the profile bottom (11) is wider than the profile bead (12).

7. Sensor according to one of claims 1 to 6,
**characterised in that**
the sensor housing (2) has externally an antibacterial coating (16).

8. Sensor according to claim 7,
**characterised in that**
the antibacterial coating (16) has silver iodide.

9. Sensor according to one of claims 1 to 8,
**characterised in that**
the opening (8) in the holder (4) or the opening (7) in the wall (3) has a resilient lining (17), which exerts a contact pressure on the thread of the sensor housing (2).

10. Sensor according to one of claims 1 to 9,
**characterised in that**
the sensor housing (2) is secured with at least one lock nut (18) in the holder (4) or in the wall (3).

11. Sensor according to one of claims 1 to 10,
**characterised in that**
the holder (4) has a retaining rod (19), which has at its free end (20) a clamping ring (21) for the sensor (1) and is fixed with its other end to a device wall.

12. Sensor according to one of claims 1 to 11,
**characterised in that**
the sensor housing (2) has, outside of the holder (4) or the wall (3), a cover member, which envelops the area (23) of the sensor housing (2) projecting out of the holder (4) or the wall (3).

## Revendications

1. Capteur dans un boîtier de capteur (2) pour des zones de production exigeantes en matière d'hygiène en particulier servant à détecter un objet dans une zone à proximité du capteur (1), dans lequel le boîtier de capteur (2) est formé pour fixer de manière amovible le capteur (1) dans la zone de production dans une paroi (3) d'une machine de production ou dans une fixation (4) dans une zone de production,
dans lequel le boîtier de capteur (2) présente un contour extérieur (5), qui est adapté à un contour intérieur (6) d'une ouverture (7) dans la paroi (3) de la machine de production ou à une ouverture (8) dans la fixation et qui présente au moins un pas de filetage avec au moins une zone concave (44) et au moins une zone convexe (12),
**caractérisé en ce**
**qu'**un rayon de courbure (r₁) des surfaces des zones concaves (44) est partout supérieur à trois millimètres.

2. Capteur selon la revendication 1,
**caractérisé en ce**
**que** les pas de filetage présentent exclusivement des zones concaves et des zones convexes.

3. Capteur selon l'une quelconque des revendications 1 ou 2,
**caractérisé en ce**
**qu'**au moins un pas de filetage présente un profil combiné avec des pointes de filetage (12), avec des sections de flanc, qui jouxtent les pointes de filetage, et avec des parties aplaties se trouvant entre les sections de flanc, par lesquelles une base de filetage est formée.

4. Capteur selon l'une quelconque des revendications 1 à 3,
**caractérisé en ce**
**que** l'ouverture (8) dans la fixation (4) ou l'ouverture (7) dans la paroi (3) sont entourées par des lèvres étanches (13, 14), qui étanchéifient le passage de l'ouverture (7, 8) vers le pas de filetage du boîtier de capteur (2).

5. Capteur selon l'une quelconque des revendications 1 à 4,
**caractérisé en ce**
**que** le boîtier de capteur est fixé à l'aide d'un montage traversant dans une ouverture sans filetage d'une fixation (4).

6. Capteur selon la revendication 3,
**caractérisé en ce**
**que** le profil combiné présente un fond de profil (11) et un bourrelet de profil (12), dans lequel le fond de profil (11) est plus large que le bourrelet de profil (12).

7. Capteur selon l'une quelconque des revendications 1 à 6,
**caractérisé en ce**
**que** le boîtier de capteur (2) présente côté extérieur un revêtement (16) antibactérien.

8. Capteur selon la revendication 7,
**caractérisé en ce**
**que** le revêtement antibactérien (16) présente de l'iodure d'argent.

9. Capteur selon l'une quelconque des revendications 1 à 8,
**caractérisé en ce**
**que** l'ouverture (8) dans la fixation (4) ou l'ouverture (7) dans la paroi (3) présentent un habillage (17) élastique, qui exerce une pression de compression sur le pas de filetage du boîtier de capteur (2).

10. Capteur selon l'une quelconque des revendications 1 à 9,
**caractérisé en ce**
**que** le boîtier de capteur (2) est bloqué avec au moins un contre-écrou (18) dans la fixation (4) ou dans la paroi (3).

11. Capteur selon l'une quelconque des revendications 1 à 10,
**caractérisé en ce**
**que** la fixation (4) présente une tige de maintien (19), qui présente, au niveau de son extrémité libre (20), un anneau d'enserrage (21) pour le capteur (1) et qui est fixée, par son autre extrémité, au niveau d'une paroi d'un appareil.

12. Capteur selon l'une quelconque des revendications 1 à 11,
**caractérisé en ce**
**que** le boîtier de capteur (2) présente, à l'extérieur de la fixation (4) ou de la paroi (3), un élément de recouvrement, qui enveloppe la zone (23), dépassant de la fixation (4) ou de la paroi (3), du capteur de boîtier (2).
